# EUROPÄISCHE PATENTANMELDUNG

(11) **EP 1 655 832 A1**
(43) Veröffentlichungstag der Anmeldung: **10.05.2006**
(21) Anmeldenummer: 05110113.7
(22) Anmeldetag: 28.10.2005
(51) Int. Cl.: H02P 27/06, H02P 29/02, B60L 9/08

(54) **Antriebsvorrichtung**

(30) Priorität: 08.11.2004 DE 102004053772
(71) Anmelder: SIEMENS AKTIENGESELLSCHAFT, 80333 München (DE)
(72) Erfinder: Eckert, Peter, 91058, Erlangen (DE); Van der Giet, Michael, 52074, Aachen (DE); Laska, Bernd, 91074, Herzogenaurach (DE)

(57) **Zusammenfassung**

Die Erfindung betrifft eine Antriebsvorrichtung, insbesondere für eine Lokomotive, mit einem Umrichter, insbesondere einem Pulswechselrichter (3), der ausgangsseitig mit einem Motor, insbesondere einem Asynchronmotor (5), in Verbindung steht. Es ist vorgesehen, dass zwischen dem Umrichter und dem Motor als Serienkompensation (4) in jeder Anschlussleitung (7) des Motors ein Kondensator (6) angeordnet ist. Jeder der Kondensatoren (6) ist durch eine Leitung (8), in der ein Schalter, z.B. ein Schütz (9), eingefügt ist, überbrückt. Eine Regeleinrichtung (10) ist eingangsseitig mit einem Drehzahlmesser (11) des Motors verbunden und ausgangsseitig einerseits mit Stelleinrichtungen der Schalter und andererseits mit einem Regler (12) zum Regeln der Ausgangsspannung des Umrichters. Die Schalter sind bei einer unter einem festgelegten Wert liegenden Drehzahl des Motors geschlossen und sonst geöffnet. Während der Dauer der Schaltbewegungen der Schalter werden die Spannungen an den Kondensatoren (6) auf Null Volt abgebaut durch Regeln der Ausgangsspannung des Umrichters mit dem Regler (12), der dazu z.B. eine Pulsbreitenmodulation bewirkt.

## Beschreibung

Die Erfindung betrifft eine Antriebsvorrichtung, insbesondere für eine Lokomotive, mit einem Umrichter, insbesondere einem Pulswechselrichter, der ausgangsseitig mit einem Motor, insbesondere einem Asynchronmotor, in Verbindung steht.

Mit "Lokomotive" ist ein beliebiges Schienentriebfahrzeug gemeint.

Besonders bei einem frequenzvariablen Antrieb mit Asynchronmotor nimmt das nutzbare Drehmoment mit zunehmender Frequenz oder Drehzahl des Motors ab. Das wurde bisher durch eine Anhebung der Klemmenspannung am Asynchronmotor kompensiert. Es ist aber dabei eine Grenze dadurch gegeben, dass es eine systemtechnisch bedingte maximale Ausgangsspannung des Umrichters gibt. Es wurde daher bisher bei frequenzvariablem Antrieb der Asynchronmotor so ausgelegt, dass auch bei der maximal möglichen Drehzahl das benötigte Drehmoment stets erreicht wird. Ein solcher Asynchronmotor ist für den normalen Betrieb überdimensioniert und daher aufwändig. Außerdem kann für den Betrieb mit niedriger Drehzahl eine große Dimensionierung des Umrichters erforderlich sein.

Der Erfindung liegt die Aufgabe zugrunde, eine Antriebsvorrichtung anzugeben, die bei hoher Frequenz oder Drehzahl des Motors ein deutlich größeres nutzbares Drehmoment zur Verfügung stellt als es bisher möglich war.

Die Aufgabe wird gemäß der Erfindung dadurch gelöst, dass zwischen dem Umrichter und dem Motor als Serienkompensation in jeder Anschlussleitung des Motors ein Kondensator angeordnet ist, dass jeder der Kondensatoren durch eine Leitung, in der ein Schalter eingefügt ist, überbrückt ist und dass eine Regeleinrichtung eingangsseitig mit einem Drehzahlmesser des Motors verbunden ist und ausgangsseitig einerseits mit Stelleinrichtungen der Schalter verbunden ist, damit die Schalter bei einer unter einem festgelegten Wert liegenden Drehzahl des Motors geschlossen und sonst geöffnet sind, und die Regeleinrichtung ausgangsseitig andererseits mit einem Regler zum Regeln der Ausgangsspannung des Umrichters verbunden ist, damit während der Dauer der Schaltbewegungen der Schalter die Spannungen an den Kondensatoren auf Null Volt abgebaut sind.

Ein geschlossener Schalter stellt eine leitende Verbindung dar, während ein offener Schalter die Leitung unterbricht.

Die sogenannte Serienkompensation ist bereits bei Generatoren eingesetzt worden. Für den Einsatz bei Motoren wurde bisher ein Hindernis darin gesehen, dass eine Antriebsvorrichtung durch die Serienkompensation instabil wird.

Das Vorurteil, dass eine Serienkompensation an einem Motor, insbesondere an einem Asynchronmotor, nicht verwendet werden kann, wird mit der Antriebsvorrichtung nach der Erfindung überwunden. Die bisher befürchteten Nachteile werden gemäß der Erfindung dadurch ausgeschlossen, dass die Kondensatoren der Serienkompensation jeweils durch eine Leitung, in der ein Schalter eingefügt ist, überbrückt sind und eine Regeleinrichtung dafür sorgt, dass die Schalter bei einem niedrigen Drehmoment des Motors geschlossen sind.

Man erzielt damit den Vorteil, dass die Serienkompensation bei hoher Drehzahl sinnvoll eingesetzt werden kann, um ein erhöhtes nutzbares Drehmoment zu bekommen, während die störenden Einflüsse der Serienkompensation, die insbesondere bei niedriger Drehzahl auftreten, ausgeschlossen werden, weil dann die Kondensatoren überbrückt sind.

Mit der Antriebsvorrichtung nach der Erfindung wird der zusätzliche Vorteil erzielt, dass beim Betätigen der Schalter keine unerwünschten Stromflüsse auftreten können, da vor einem Betätigen der Schalter die Spannungen an den Kondensatoren auf Null Volt abgebaut werden.

Es ist vorteilhaft also nicht nur eine Überbrückung der Serienkompensation möglich, sondern es reichen sogar für die Überbrückung einfache Schalter aus, ohne dass es zu unerwünschten Effekten kommt.

Mit der Antriebsvorrichtung nach der Erfindung wird insbesondere der Vorteil erzielt, dass mit einfachen Mitteln und ohne Überdimensionierung eines Asynchronmotors bei hoher Frequenz oder Drehzahl ein deutlich verbessertes nutzbares Drehmoment erzielt wird, ohne dass bei niedriger Frequenz oder Drehzahl Instabilitäten, wie Welligkeiten des Stromes oder des Drehmomentes auftreten können. Dadurch kommt man mit einem kleineren Umrichter aus, und reduziert die Geräuschentwicklung des Motors und die Belastung des gesamten Antriebs.

Aufgrund der Serienkompensation kann sogar eine höhere Motorklemmenspannung und damit ein höheres Drehmoment erzielt werden als es durch eine Steigerung der Zwischenkreisspannung möglich wäre.

Die Schalter sind beispielsweise Schütze. Solche Schütze sind besonders einfach aufgebaut und reichen für das erforderliche Überbrücken der Kondensatoren vorteilhaft aus.

Der Regler zum Regeln der Ausgangsspannung des Umrichters verwendet beispielsweise die als solche bekannte Pulsbreitenmodulation. Dabei werden durch geeignete Pulsmuster die Amplitude, die Frequenz und die Phasenlage der Spannung geändert.

Zum Bestimmen der Drehzahl des Motors ist beispielsweise ein Drehzahlmesser mit dem Motor verbunden.

Nach einem anderen Bespiel wird die als Eingangsgröße für die Regeleinrichtung benötigte Drehzahl des Motors aus Messgrößen des Motors berechnet.

Mit der Antriebsvorrichtung nach der Erfindung wird eine wirtschaftlich zu betreibende Antriebsvorrichtung, die insbesondere für eine Lokomotive geeignet ist, zur Verfügung gestellt.

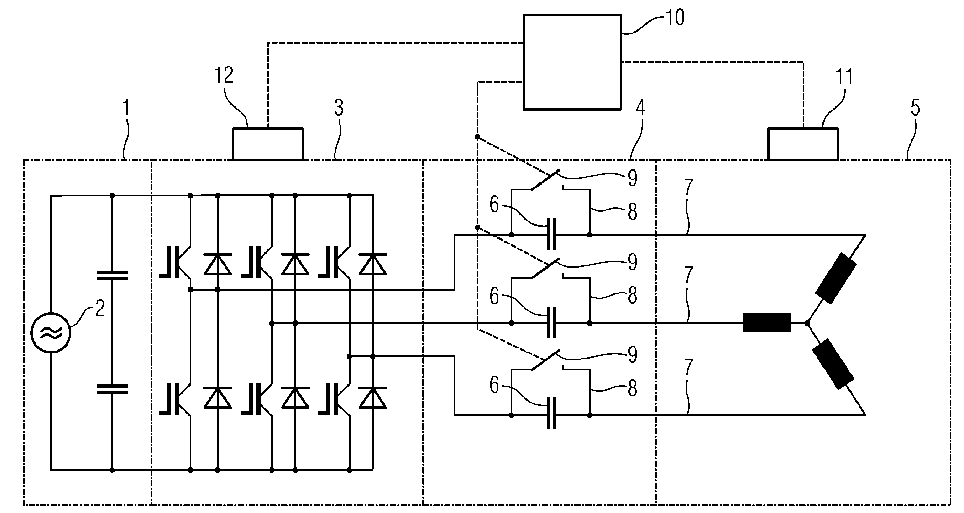

Ein Ausführungsbeispiel der Antriebsvorrichtung nach der Erfindung wird anhand der Zeichnung näher erläutert:

Die Zeichnung zeigt einen Zwischenkreis 1 mit Spannungsquelle 2. An den Zwischenkreis 1 schließt sich ein Pulswechselrichter 3 an, der über eine Serienkompensation 4 mit einem Asynchronmotor 5 in Verbindung steht. Die Serienkompensation 4 besteht aus Kondensatoren 6 in den drei Anschlussleitungen 7 des Motors 5. Jeder der Kondensatoren 6 ist durch eine Leitung 8 überbrückt, in der ein Schütz 9 angeordnet ist.

Die Schütze 9 sind bei niedriger Drehzahl des Asynchronmotors 5 geschlossen und bei hoher Drehzahl des Asynchronmotors 5 geöffnet. Während der Betätigung (Öffnen oder Schließen) eines Schützes 9 liegt an den Kondensatoren 6 keine Spannung an. Um das zu gewährleisten, ist eine Regeleinrichtung 10 eingangsseitig mit einem Drehzahlmesser 11 des Asynchronmotors 5 und ausgangsseitig mit Stellvorrichtungen der Schütze 9 sowie mit einem Regler 12 zur Regelung der Ausgangsspannung des Pulswechselrichters 3 verbunden.

Falls die mit dem Drehzahlmesser 11 bestimmte Drehzahl des Asynchronmotors 5 einen vorgegebenen Wert unterschreitet, wird zunächst über den Regler 12, z.B. durch Pulsbreitenmodulation, die Ausgangsspannung des Pulswechselrichters 3 so verändert, dass an den Kondensatoren 6 der Serienkompensation 4 keine Spannung mehr anliegt. Erst dann werden die Schütze 9 geschlossen, um die Kondensatoren 6 zu überbrücken. Danach kann die Ausgangsspannung des Pulswechselrichters 3 wieder ihren ursprünglichen Wert annehmen.

Wenn die Drehzahl des Asynchronmotors 5 wieder den vorgegebenen Wert übersteigen sollte, wird durch die Regeleinrichtung 10 und den Regler 12 erneut die Ausgangsspannung des Pulswechselrichters 3 so eingestellt, dass an den Kondensatoren 6 keine Spannung anliegt. Erst dann werden die Schütze 9 wieder geöffnet, so dass die Serienkompensation 4 wieder ihre Wirkung entfalten kann. Danach kann die Ausgangsspannung des Pulswechselrichters 3 wieder ihren ursprünglichen Wert annehmen.

Dadurch, dass die Serienkompensation 4 nur bei hohen Drehzahlen des Asynchronmotors 5 in Betrieb ist, kann sie bei diesen Drehzahlen vorteilhaft eingesetzt werden, während nachteilige Eigenschaften, die sie bei geringer Drehzahl hat, sich nicht auswirken können. Durch die Regelung der Ausgangsspannung des Pulswechselrichters 3 wird außerdem gewährleistet, dass während der Schaltbewegungen der Schütze 9 keine unerwünschten Stromflüsse entstehen können.

Die Antriebsvorrichtung nach der Erfindung ermöglicht ein verbessertes nutzbares Drehmoment des Asynchronmotors 5 gegenüber bekannten Antriebsvorrichtungen.

## Patentansprüche

1. Antriebsvorrichtung, insbesondere für eine Lokomotive, mit einem Umrichter, insbesondere einem Pulswechselrichter (3), der ausgangsseitig mit einem Motor, insbesondere einem Asynchronmotor (5), in Verbindung steht,
**dadurch gekennzeichnet, dass** zwischen dem Umrichter und dem Motor als Serienkompensation (4) in jeder Anschlussleitung (7) des Motors ein Kondensator (6) angeordnet ist, dass jeder der Kondensatoren (6) durch eine Leitung (8), in der ein Schalter eingefügt ist, überbrückt ist und dass eine Regeleinrichtung (10) eingangsseitig mit einem Drehzahlmesser (11) des Motors verbunden ist und ausgangsseitig einerseits mit Stelleinrichtungen der Schalter verbunden ist, damit die Schalter bei einer unter einem festgelegten Wert liegenden Drehzahl des Motors geschlossen und sonst geöffnet sind, und die Regeleinrichtung (10) ausgangsseitig andererseits mit einem Regler (12) zum Regeln der Ausgangsspannung des Umrichters verbunden ist, damit während der Dauer der Schaltbewegungen der Schalter die Spannungen an den Kondensatoren (6) auf Null Volt abgebaut sind.

2. Antriebsvorrichtung nach Anspruch 1,
**dadurch gekennzeichnet, dass** in jede Leitung (8) als Schalter ein Schütz (9) eingefügt ist.

3. Antriebsvorrichtung nach einem der Ansprüche 1 oder 2,
**dadurch gekennzeichnet, dass** der Regler (12) zum Regeln der Ausgangsspannung des Umrichters eine Pulsbreitenmodulation bewirkt.
